# FASCICULE DE BREVET EUROPEEN

(11) **EP 0 532 814 B1**
(45) Date de publication et mention de la délivrance du brevet: **02.07.1997**
(21) Numéro de dépôt: 91460043.2
(22) Date de dépôt: 20.09.1991
(51) Int. Cl.: B01D 53/04, B01D 15/08

(54) **Dispositif de traitement de fluide, au moyen d'une structure d'adsorption à feuilles superposées espacées,et régénération par effet Joule**
Vorrichtung zur Behandlung von Fluiden mit einer Adsorptionsstruktur aus geschichteten Lagen , die voneinander einen Abstand besitzen, und Regeneration durch den Jouleeffekt
Device for treating fluids with an adsorption structure of superposed and spaced sheets and regeneration by joule effect

(43) Date de publication de la demande: 24.03.1993
(73) Titulaire: Martin, Guy, F-35510 Cesson Sévigné (FR); Baudu, Michel, F-87920 Condat sur Vienne (FR); Le Cloirec, Pierre, F-30380 Saint Christol les Ales (FR)
(72) Inventeur: Martin, Guy, F-35510 Cesson Sévigné (FR); Baudu, Michel, F-87920 Condat sur Vienne (FR); Le Cloirec, Pierre, F-30380 Saint Christol les Ales (FR)
(74) Mandataire: Corlau, Vincent

(56) Documents cités:
- EP-A- 0 104 749
- DE-A- 1 769 617
- DE-A- 2 807 831
- DE-B- 1 545 233
- FR-A- 2 612 799
- US-A- 4 737 164

## Description

Le domaine de l'invention est celui du traitement de fluides comportant des constituants adsorbables.

Plus précisément, la présente invention concerne un dispositif de traitement de fluides, tels que l'air ou l'eau par exemple, chargés en constituants adsorbables, à l'aide d'un matériau adsorbant.

De façon connue, les constituants adsorbables peuvent notamment consister en des molécules de produits chimiques, de solvants, de produits chlorés, etc ... présents dans un liquide, dans un gaz, ou dans l'air.

Le traitement de tels fluides est notamment effectué in situ dans les centres de recherche ou les unités de production utilisant ou fabriquant de tels produits.

Ce traitement est par exemple nécessaire pour ne pas rejeter dans la nature des produits hautement toxiques tels que par exemple le trichloroéthylène, le trichloroéthane, ou des produits à base de fréon.

Le traitement du fluide consiste de façon connue à lui faire traverser un matériau qui adsorbe les constituants adsorbables, réalisant ainsi une fonction de filtration, et à évacuer le fluide débarrassé de ses constituants polluants, soit pour lui faire subir une autre opération, soit pour le rejeter dans la nature.

Le matériau adsorbant peut notamment être du charbon actif, se présentant soit sous la forme de grains, soit sous la forme de plusieurs couches ou feuilles de fibres empilées les unes sur les autres.

L'augmentation de la concentration de constituants adsorbés sur le matériau adsorbant nécessite de le régénérer cycliquement.

Selon une première méthode connue, la régénération s'effectue par injection de vapeur d'eau sur le matériau adsorbant, afin de provoquer la désorption des produits adsorbés. Cette méthode présente l'inconvénient de nécessiter l'emploi d'une chaudière pour la production de vapeur d'eau.

D'autre part, elle est contre-indiquée dans le cas où les produits à désorber ne sont pas stables à la vapeur d'eau, comme le trichloroéthane.

Selon une autre méthode connue, la régénération peut aussi s'effectuer par injection d'air chaud, mais on observe des temps de régénération très longs, avec de plus un pourcentage de régénération relativement faible.

Le document de brevet européen EP-A-0 104 749 de la société ACTIVATED CARBON SERVICES LIMITED décrit un dispositif de régénération de charbon actif se présentant sous la forme de grains, au moyen d'un procédé de chauffage de matériau par effet Joule.

Le charbon à régénérer est chargé dans une colonne de traitement, dont la base est formée par une électrode, et recouvert par une autre électrode. L'application d'une différence de potentiel entre les électrodes génère un courant qui parcourt le charbon à régénérer, provoquant ainsi son échauffement. Les molécules adsorbées se désorbent et sont évacuées de la colonne de traitement par insufflation d'un gaz ou de vapeur.

Le principal inconvénient de ce type de dispositif est qu'il est spécifiquement dédié à l'opération de régénération, ce qui signifie qu'il impose de transférer le matériau adsorbant, saturé en constituants adsorbés, depuis l'installation de filtration jusqu'au lieu de régénération.

Par ailleurs, afin d'obtenir de bons contacts chimiques entre les grains de charbon actif, il est nécessaire de prévoir des moyens mécaniques de vibration de la colonne de traitement contenant les grains pour obtenir un tassement de ces grains. En dépit de cela, on constate une hétérogénéité de la masse granuleuse de charbon actif, tant pour l'adsorption que pour la désorption.

On connaît par ailleurs des dispositifs permettant l'adsorption et la désorption de molécules adsorbables utilisant des fibres de charbon actif, notamment sous forme de tissu. Un tel dispositif est par exemple décrit dans le document de brevet français FR-A-2 612 799 aux noms des sociétés AMEG FRANCE et CECA S.A qui concerne un équipement pour le traitement de rejets gazeux chargés de solvants. Le charbon actif se présente sous la forme de matelas constitués de 10 à 30 couches de feuilles de charbon actif. Chaque matelas est disposé dans un tiroir dont le fond est constitué de résistances électriques et les tiroirs sont décalés les uns par rapport aux autres dans une cuve de traitement. Des déflecteurs canalisent le fluide à traiter de façon que chaque veine de fluide ne traverse qu'un seul des tiroirs. L'opération de désorption est réalisée par chauffage des résistances électriques placées sous les matelas de couches de charbon actif.

Le principal inconvénient de ce dispositif est que le fluide à traiter ne traverse qu'une seule fois un matelas de couches de charbon actif. L'adsorption n'est donc pas satisfaisante.

Un autre inconvénient de ce dispositif est que la désorption est effectuée par chauffage de résistances électriques. Les matelas de charbon actif sont donc chauffés indirectement si bien que l'opération de désorption est relativement longue et le pourcentage de régénération faible.

La présente invention a notamment pour objectif de pallier ces inconvénients.

Plus précisément, un premier objectif de l'invention est de mettre en oeuvre un dispositif de traitement de fluide permettant à la fois une rétention efficace des particules adsorbables présentes dans le fluide en phase d'adsorption et un taux de régénération élevé en phase de désorption.

Un autre objectif de la présente invention est de favoriser la répartition et la circulation des particules dans la cuve de traitement où est placée la structure en matériau adsorbant, de façon à augmenter le rendement des phases d'adsorption et de désorption.

Ces objectifs, ainsi que d'autres qui apparaîtront par la suite, sont atteints grâce à un dispositif de traitement de fluide, notamment d'air ou d'eau, chargé par au moins un constituant adsorbable comprenant les caractéristiques de la revendication 1. Des modes préférentiels de réalisation de l'invention sont définis dans les revendications dépendantes.

La configuration essentiellement bidimensionnelle de chaque feuille permet une bonne homogénéité d'adsorption comme de désorption par effet Joule, sur l'ensemble de la feuille.

Selon un mode de mise en oeuvre particulier de l'invention, ledit matériau adsorbant est un matériau électriquement conducteur.

Selon un mode de mise en oeuvre particulier de l'invention, au moins une desdites feuilles de la structure en matériau adsorbant est réalisée par une feuille de tissu dont les fibres sont constituées de fils en matériau conducteur électrique auxquels sont agglomérées des particules en matériau adsorbant. Dans ce cas, ladite structure peut avantageusement comporter une feuille de tissu unique.

Cette configuration est avantageusement utilisée lorsque ledit matériau adsorbant est peu ou pas conducteur d'électricité.

Avantageusement, le dispositif comporte des moyens de réalisation d'un vide partiel, destinés à être utilisès au moins au départ de chaque phase de désorption, et/ou des moyens de convection libre ou forcée d'un gaz inerte.

Selon une configuration préférentielle du dispositif selon l'invention, la cuve de traitement comporte au moins une extrémité de paroi de forme tronconique et lesdites feuilles sont réalisées par repliement sur elle-même d'une feuille de matériau adsorbant de telle sorte que lesdites feuilles espacées entre elles soient sensiblement parallèles entre elles.

Selon une autre configuration préférentielle, ladite structure est constituée par un jeu de feuilles en matériau adsorbant, superposées, concentriques, espacées entre elles, et soit concentriques et de sections fermées, soit enroulées de façon spiralée.

Avantageusement, ladite structure en matériau adsorbant est disposée dans une cuve de traitement dont les parois sont orientées de façon à favoriser la création de turbulences dans ledit flux de fluide à traiter. Ainsi, ladite cuve de traitement peut, par exemple, comporter au moins une extrémité de parois de forme tronconique (cf. revendication 4).

Cette configuration permet de favoriser la circulation des substances adsorbables en phase d'adsorption et de désorption.

Selon un mode de réalisation préférentiel, le dispositif comprend des moyens d'extraction des gaz de désorption extraits lors de la phase de régénération du matériau adsorbant, lesdits moyens d'extraction appartenant au groupe comprenant les brûleurs, les incinérateurs, les chambres de condensation, les chambres d'épuisement par solvant ou par épuration biologique.

Selon un autre mode de réalisation préférentiel, le dispositif comprend des moyens d'extraction des gaz de désorption extraits lors de la phase de régénération du matériau adsorbant, lesdits moyens d'extraction étant constitués par une chambre de condensation, les gaz extraits étant entraînés en circulation au moyen d'un gaz porteur, et la phase gazeuse non condensée étant recyclée dans le réacteur.

D'autres caractéristiques et avantages de la présente invention apparaîtront à la lecture de la description suivante d'un mode de mise en oeuvre préférentiel de l'invention, donné à titre illustratif et non limitatif, et des dessins annexés dans lesquels :
- la figure 1 représente un mode de mise en oeuvre préférentiel de la présente invention sous forme d'une structure constituée de feuilles de matériau adsorbant sensiblement parallèles entre elles, superposées et disposées dans une cuve de traitement ;
- la figure 2 représente une coupe d'un autre mode de mise en oeuvre préférentiel de la présente invention sous forme d'une structure constituée de feuilles de matériau adsorbant, superposées, concentriques et de sections fermées;
- la figure 3 représente une coupe du dispositif de la figure 2 compris dans une cuve de traitement ;
- la figure 4 représente un dispositif complet de traitement de fluide selon la présente invention ;
- la figure 5 représente une vue latérale interne de la cuve de la figure 4, contenant une armature permettant de disposer les feuilles de matériau adsorbant dans la cuve de traitement ;
- la figure 6 représente une vue en perspective de l'armature de la figure 5.
- la figure 7A représente, sous forme de schéma, un autre mode de mise en oeuvre préférentiel de la présente invention, le dispositif incluant des moyens d'extraction des gaz de désorption ;
- la figure 7B représente, sous forme de schéma, encore un autre mode de mise en oeuvre de l'invention, le dispositif incluant d'autres moyens d'extraction des gaz de désorption.

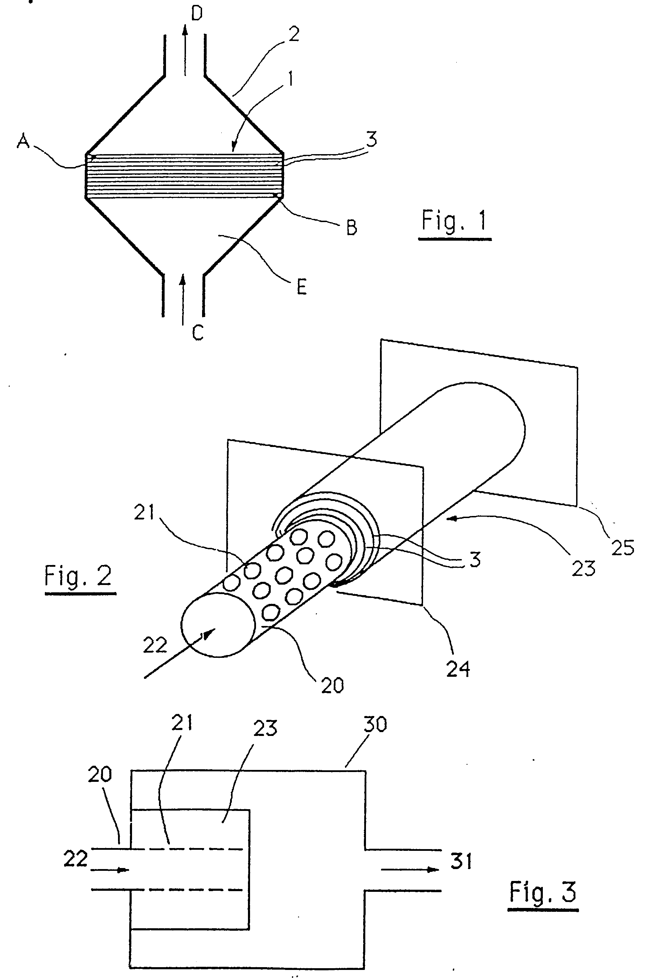

La figure 1 représente une structure en matériau adsorbant constituée de feuilles sensiblement parallèles entre elles, superposées et disposées dans une cuve de traitement.

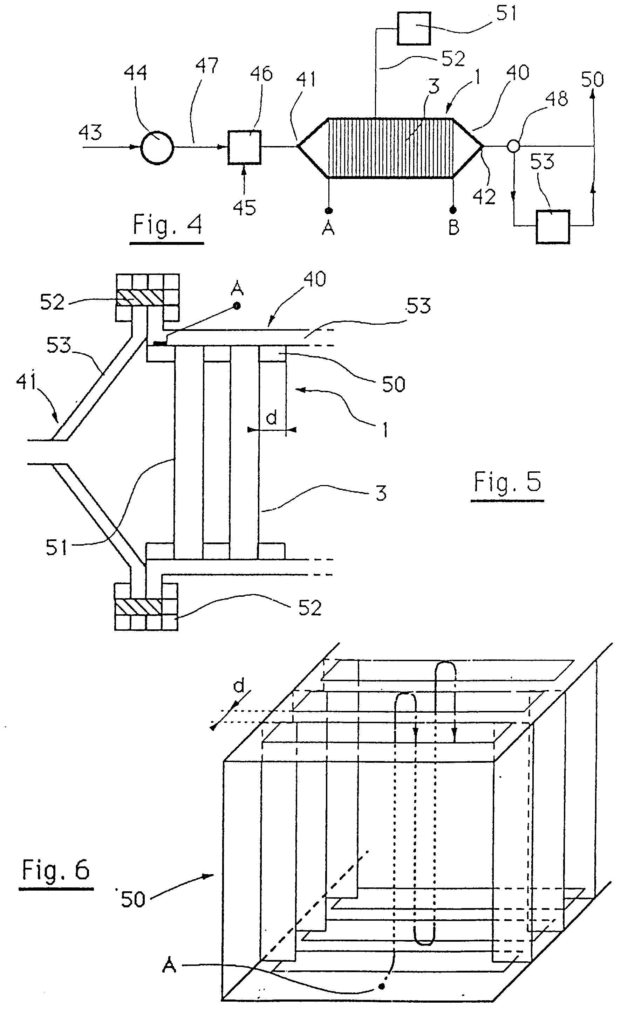

Cette structure 1 est constituée soit d'un jeu de feuilles indépendantes montées une à une en superposition, soit d'une feuille unique en matériau adsorbant pliée en accordéon (voir Fig. 5 et 6) de telle sorte que l'on obtient une superposition de plusieurs feuilles 3 de matériau adsorbant.

Les travaux des inventeurs ont montré que l'espacement entre deux feuilles 3 superposées favorise la création de turbulences entre les feuilles 3 lorsque celles-ci sont traversées par le flux de fluide à traiter. L'espacement inter-feuilles est un compromis entre l'écoulement du système, le baillement éventuel des toiles et la turbulence induite. L'épaisseur de chaque feuille 3 participe également à la création de turbulences inter-feuilles. L'espace inter-feuilles vaut entre 5 et 10 mm environ et préférentiellement 5 mm environ et l'épaisseur de chaque feuille vaut préférentiellement entre 2 et 3 mm.

La structure 1 de matériau adsorbant est comprise dans une cuve de traitement 2. Le fluide à traiter pénètre dans la cuve de traitement 2 par l'entrée C et ressort débarrassé des constituants adsorbables qu'il contenait en D. Le flux de fluide à traiter traverse successivement les multiples feuilles 3 de matériau adsorbant et chaque feuille 3 retient une partie des constituants adsorbables.

La géométrie de la cuve de traitement 2 favorise la création de turbulences inter-feuille. Lorsque le flux de fluide à traiter pénètre dans la cuve de traitement 2 par l'entrée C, celui-ci subit une dépression homogène favorisant sa répartition sur la surface de la première feuille 3 rencontrée, tout en créant des turbulences dans la zone E.

Les feuilles sont constituées de tissu adsorbant. Ce tissu peut être constitué de fibres, tissées ou non, d'un matériau adsorbant.

Le matériau adsorbant utilisé peut être soit naturel (charbon actif) soit composé. Un des composés convenant particulièrement à l'application effectuée est le polyacrylonitrile. Celui-ci peut être activé afin d'augmenter sa surface active.

L'activation de polyacrylonitrile permet d'obtenir une surface active pouvant aller jusqu'à 1500 m²/g de composé.

L'opération de désorption consistant à chauffer le matériau adsorbant pour désorber les composants adsorbés est réalisée par application d'une différence de potentiel entre les extrémités A et B de la structure adsorbante.

Cette différence de potentiel entre A et B génère un courant circulant dans l'ensemble de la structure. Les travaux des inventeurs ont montré qu'il était possible d'utiliser la conductivité électrique du charbon actif sous forme de tissu pour effectuer des opérations de désorption par effet Joule. On constate une conductivité suffisante (bien entendu inférieure à celle du graphite) due vraisemblablement à la présence de couches graphitiques orientées dans la structure. La résistivité du charbon actif permet ainsi son réchauffement par effet Joule et donc la désorption des composants adsorbés. Cette désorption se produit par exemple aux alentours de 300° C et constitue la phase de régénération du matériau adsorbant. Plus précisément, le phénomène de désorption peut être contrôlé en modulant la différence de potentiel électrique aux bornes de la structure, la température étant fonction de la puissance appliquée.

En outre, les composants désorbés peuvent être récupérés en sortie de la cuve, par une opération de condensation, de séparation de phase, ou autre comme expliqué plus loin... La désorption peut être réalisée sous un vide partiel initial susceptible de favoriser le transfert.

L'application de la différence de potentiel peut se faire soit aux deux extrémités de la feuille de charbon actif continue (pliée en accordéon), soit aux extrémités de chaque ensemble de feuille continue. Préférentiellement, le potentiel est appliqué à chaque épaisseur de toile, les connexions pouvant être groupées (plusieurs toiles) en série ou en parallèle. Cette différence de potentiel peut également être appliquée aux extrémités de chaque feuille lorsque la structure 1 de matériau adsorbant est constituée d'autant de feuilles qu'il y a de feuilles 3 de charbon actif.

La désorption par effet Joule, c'est-à-dire en appliquant une différence de potentiel aux extrémités de la structure adsorbante, n'est possible que si cette structure est conductrice d'électricité. Dans le cas du charbon actif, comme précisé précédemment, une conductivité suffisante est obtenue grâce à la présence de couches graphitiques dans le charbon actif.

Cependant, dans le cas où le matériau adsorbant utilisé n'est pas conducteur d'électricité, la désorption par effet Joule n'est pas possible. On peut alors, selon l'invention, utiliser des fils conducteurs d'électricité auxquels sont accolées les particules adsorbantes non conductrices d'électricité. L'application d'une différence de potentiel aux extrémités d'un tel fil provoque son échauffement et la chaleur dissipée est transférée auxdites particules par conduction. Ceci permet la désorption des composés adsorbés.

De tels fils, afin de pouvoir être utilisés selon la présente invention, sont tissés pour former une (des) feuille(s) que l'on pourra ensuite disposer dans une cuve de traitement 2 conformément à la figure 1.

Afin d'évacuer les particules désorbées hors de la cuve de traitement, un flux d'air chaud est injecté dans la cuve par l'entrée C, et récupéré à la sortie D de la cuve. Cet air chargé en particules polluantes peut ensuite subir un traitement dans le but de séparer les particules polluantes de l'air.

Il est à noter que tout autre fluide permettant de réaliser la même fonction (convection forcée) peut être utilisé (vapeur, eau, fluide neutre, ...). L'évacuation des molécules désorbées peut également être réalisée par convection libre.

La figure 2 représente une coupe d'un autre mode de mise en oeuvre de la présente invention, sous forme d'une structure constituée de feuilles de matériau adsorbant, superposées, soit concentriques et de section fermée, soit enroulées de façon spiralée.

Cette figure présente une structure 23 de matériau adsorbant disposée autour d'un tube 20 comportant de multiples perforations 21. La structure 23 est constituée de feuilles 3 de matériau adsorbant concentriques et de section fermée superposées les unes sur les autres. Ces feuilles 3 de matériau adsorbant sont espacées les unes des autres d'une certaine distance.

Le fluide à traiter pénètre dans le tube 20 par l'entrée 22 et ne peut ressortir du tube 20 que par les perforations 21, le tube 20 étant bouché à son autre extrémité. Le fluide à traiter traverse alors les différentes feuilles 3 de matériau adsorbant qui retiennent les constituants adsorbables. L'espacement inter-feuilles favorise la création de turbulences entre les feuilles.

Afin de maintenir un espace entre chaque feuille et sa voisine, il est nécessaire d'assurer la tenue en place de chaque feuille. Cela peut par exemple être réalisé en plaçant les feuilles adsorbantes entre deux plaques d'extrémités 24 et 25. Ces plaques d'extrémité 24, 25 peuvent coopérer avec des éléments d'espacement formant entretoises, insérés entre les feuilles adsorbantes (non représentés) permettant de maintenir un espace entre chaque feuille et sa voisine ou alors, plus simplement, exercent une force de tension rigidifiant sur les couches 3.

L'utilisation d'une feuille unique enroulée en spirale autour du tube 20 de façon à obtenir un nombre suffisant de feuilles 3 suivant l'application effectuée constitue un mode de mise en oeuvre avantageux de la présente invention. Bien entendu, il faudra veiller, par des moyens adéquats, à respecter un espace inter-feuilles de façon à favoriser la création de turbulences entre les différentes feuilles. Ces moyens peuvent notamment consister en une couche isolante filtrante, telle que la fibre de verre par exemple.

L'opération de désorption consiste, selon un mode de mise en oeuvre avantageux de la présente invention, à appliquer une différence de potentiel entre les deux plaques 24, 25, de façon à provoquer un échauffement du matériau adsorbant par effet Joule.

Dans le cas où la structure 23 adsorbante est constituée par un enroulement d'une feuille unique de matériau adsorbant autour du tube 20, en respectant un espace inter-feuilles suffisant pour favoriser la création de turbulences, il est possible d'effectuer l'opération de désorption par effet Joule en appliquant une différence de potentiel entre le tube 20 (conducteur) et une plaque perforée conductrice (non représentée) recouvrant l'ensemble de la structure 23.

Les composants adsorbés sont évacués par les perforations de la plaque conductrice (non représentée) par insufflation d'un flux d'air, d'eau ou de vapeur dans le tube 20.

La figure 3 représente une coupe du dispositif de la figure 2 compris dans une cuve de traitement 30. Le flux de fluide à traiter circule dans le tube 20 et s'échappe de ce tube 20 par les orifices 21. Le flux traverse ensuite les différentes feuilles de la structure 23 de matériau adsorbant et le fluide traité sort de la cuve de traitement 30. Les constituants adsorbables sont retenus dans les feuilles de la structure 23. L'opération de désorption consiste à cesser l'introduction de fluide à traiter 22 et à procéder à l'échauffement du matériau adsorbant par effet Joule. Les constituants adsorbés sont ensuite évacués de la cuve de traitement 30 par insufflation d'un fluide neutre (gaz, eau, ...) dans le tube 20 et récupérés à la sortie 31 de la cuve 30.

Un dispositif complet de traitement de fluide selon l'invention est représenté en figure 4.

Ce dispositif comprend une cuve 40 de traitement de fluide symétrique dont l'entrée et la sortie sont respectivement notées 41 et 42. La structure adsorbante présente dans la cuve présente un succession de feuilles 3 espacées entre elles.

Le fluide à traiter 43 est pompé par une pompe d'alimentation 44 vers une vanne 46 à deux voies. La vanne 46 à deux voies permet de sélectionner le fluide admis à l'entrée 21 de la cuve de traitement 40. Ce fluide est soit celui à traiter 47, soit celui 45 permettant d'évacuer les composés désorbés hors de la cuve de traitement 40.

Dans un premier temps, la vanne 46 sélectionne le fluide à traiter 47. Le fluide 47 est introduit dans la cuve de traitement 40 par l'entrée 41 de forme tronconique, afin de favoriser la création de turbulences. Les constituants adsorbables sont retenus par les feuilles 3 de matériau adsorbant et le fluide régénéré est évacué de la cuve 40 par la sortie 42. La vanne trois voies 48 permet l'évacuation du fluide régénéré 50, par exemple dans l'atmosphère si le fluide traité est de l'air.

Lorsque la structure de matériau adsorbant est chargée d'une certaine quantité de constituants adsorbés, la pompe d'alimentation 44 est arrêtée et une différence de potentiel est appliquée entre les points A et B, provoquant ainsi la désorption des constituants adsorbés par effer Joule.

La température de la structure adsorbante est soit mesurée par des thermocouples 52 et affichée 51, soit déterminée à partir de la tension appliquée entre A et B et du courant adsorbé.

Lorsque la phase de désorption est terminée, un flux de fluide de régénération 45 est injecté dans la cuve de traitement 40 pour évacuer les composants adsorbés de la cuve 40.

La vanne 48 guide le flux de fluide présent à la sortie 42 de la cuve vers un module de traitement 53 réalisant par exemple un piégeage cryoscopique pour séparer les composants désorbés du fluide de régénération. Le fluide débarrassé des composants désorbés est ensuite évacué 50, et le cycle complet peut reprendre à son début.

La figure 5 représente une vue latérale interne de la cuve 40 de la figure 4, contenant une armature 50 permettant de disposer les feuilles 3 de matériau adsorbant dans la cuve de traitement 40.

La structure 1 de matériau adsorbant est constituée d'une feuille de tissu adsorbant. Celle-ci est "pliée en accordéon" de telle sorte que l'on obtient un certain nombre de feuilles 3 traversées par le fluide à traiter se présentant à l'entrée 41 de la cuve de traitement 40.

La feuille de tissu adsorbant est tendue entre les parois inférieures et supérieures d'une armature 50 qui peut être retirée de la cuve de traitement 40, par séparation, à l'aide de moyens de solidarisation 52, de la partie tronconique 41 du reste de la cuve de traitement 40. L'armature 50 permet de maintenir les (parties de) feuilles 3 de matériau adsorbant sensiblement parallèles entre elles, espacées d'une distance d (comprise entre environ 5 et environ 10 mm) et perpendiculaires au flux de fluide à traiter.

L'extrémité de la première feuille 51 de matériau adsorbant est reliée à une borne A pour permettre l'application de la différence de potentiel réalisant l'effet Joule.

Un bâti isolant 53 constitue les parois de la cuve de traitement et empêche les déperditions calorifiques.

La figure 6 représente une vue en perspective de l'armature 50 de la figure 5 introduite dans la cuve de traitement 40. Les flèches indiquent le sens de pliage de la feuille d'adsorbant. L'utilisation d'armatures 50 présentant des distances d différentes permet d'adapter le dispositif de la figure 4 à des traitements de fluides différents où par exemple les concentrations de constituants adsorbables sont différentes, sans pour autant avoir à changer tout le dispositif.

Un mode d'utilisation avantageux de la présente invention consiste à utiliser deux cuves de traitement identiques fonctionnant en alternance, c'est-à-dire que l'une est en phase d'adsorption pendant que l'autre est en phase de désorption et vice-versa. Cette configuration permet d'effectuer du traitement de fluide en continu.

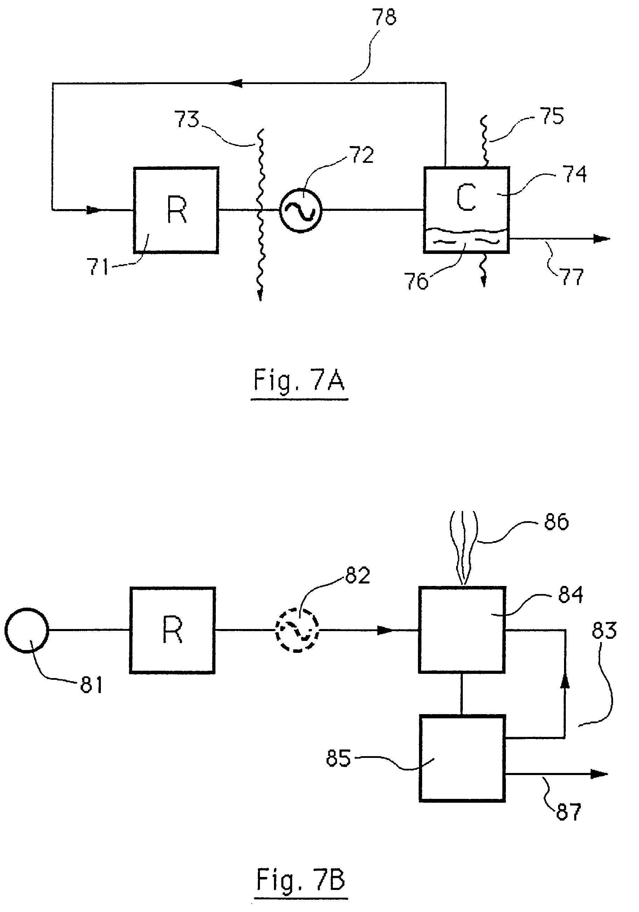

Les figures 7A, 7B illustrent deux modes préférentiels distincts de traitement des gaz extraits produits au cours de la phase de régénération par désorption des composants adsorbés dans les réacteurs de l'invention.

Ces gaz extraits sont chargés en divers constituants notamment des solvants organiques qu'il est utile d'éliminer ou de récupérer du fait de leur toxicité ou de leur valeur économique.

Dans le premier mode de réalisation de la figure 7A, les gaz de désorption sont extraits des réacteurs 71 au moyen d'un gaz porteur entrainé en circulation par l'extracteur 72. Le gaz porteur est préférentiellement de l'air en un gaz inerte tel que l'azote. Le courant gazeux est refroidi 73 et introduit dans une chambre de condensation 74.

La chambre 74 est à pression partielle élevée et maintenue à basse température par exemple à l'aide d'un fluide de refroidissement 75 (air, eau, ...).

Les composés condensés 76 sont récupérés en fond de chambre 74, d'où ils peuvent être soutirés 77.

Le gaz porteur comportant les composés gazeux extraits non condensés est avantageusement recyclé 78 et renvoyé dans le réacteur. De cette façon, l'opération de régénération s'effectue à l'abri de tout risque de pollution.

Dans le second mode de réalisation de la figure 7B, un ventilateur 81 (ou un extracteur 82) véhicule les gaz extraits en direction d'une installation d'épuisement 83. L'installation 83 utilise avantageusement un solvant d'épuisement, ruisselant par exemple au moyen d'une colonne de transfert sur garnissage contenue dans une chambre supérieure 84. La solution chargée est reçue dans une chambre inférieure 85, d'où elle peut être envoyée 87 à rectifier, à détruire en incinération, ou autre. Le gaz purifié 86 est extrait en haut de la chambre d'épuisement 84.

Dans une variante applicable au mode de réalisation de la figure 7B, l'installation d'épuisement 83 est constituée d'un bioépurateur 84 coopérant avec le séparateur 85. L'épuration biologique peut être effectuée en utilisant des bactéries hydrophiles soit directement, soit en émulsion suivant que les produits à extraire des gaz sont hydrosolubles (acétate de butyle, alcools, phénols, cétones,...) ou non. Dans ce dernier cas, l'émulsion peut être réalisée par exemple à l'aide d'un venturi ou d'un mélangeur. A titre d'exemple, pour la digestion biologique d'un alcool, on aura la réaction chimique suivante :

(ROH) + (NH₄⁺) + (PO₄H₂⁻) + (OE) → (CO₂) + (C₅H₇NO₂)

Le résidus de réaction (C₅H₇NO₂) forme une boue 87, à évacuer depuis le séparateur 85. La biomasse est recyclée dans la chambre haute 84.

On mentionne enfin que dans un autre mode de réalisation, le gaz chargé peut être directement envoyé au brûleur ou incinérateur, particulièrement lorsque les solvants organiques à éliminer présentent un PCI intéressant.

## Revendications

1. Dispositif de traitement de fluide chargé par au moins un constituant adsorbable, du type comprenant une structure (1) en matériau adsorbant destinée à être traversée par un flux dudit fluide à traiter de façon à faire adsorber ledit constituant adsorbable par ledit matériau adsorbant, ladite structure étant disposée dans une cuve (2,40) de traitement et ledit dispositif comprenant des moyens (A,B) de régénération périodique du matériau adsorbant par effet Joule, lesdits moyens (A,B) étant destinés à coopérer avec ladite structure (1) au cours d'une phase de désorption consistant à faire parcourir un courant électrique dans au moins une desdites feuilles de ladite structure, caractérisé en ce que ladite structure en matériau adsorbant est constituée d'un jeu de feuilles de tissu de charbon actif (3) électriquement conductrices ou d'un jeu de feuilles obtenu par tissage de fils, conducteurs d'électricité auxquels sont accolées les particules adsorbantes non conductrices d'électricité, superposées et/ou sensiblement parallèles, espacées entre elles d'un espacement allant de 5 à 10 mm et traversées successivement par ledit flux de fluide.

2. Dispositif selon la revendication 1 caractérisé en ce que ledit fluide est de l'air ou de l'eau.

3. Dispositif selon l'une des revendications 1 ou 2 caractérisé en ce qu'il comporte des moyens de réalisation d'un vide partiel, destinés à être utilisés au moins au départ de chaque phase de désorption, et/ou des moyens de convection libre ou forcée d'un gaz inerte.

4. Dispositif selon l'une quelconque des revendications 1 à 3 caractérisé en ce que la cuve de traitement comporte au moins une extrémité de paroi de forme tronconique et en ce que ledit jeu de feuilles (3) est réalisé par repliement sur elle-même d'une feuille de tissu de charbon actif de telle sorte que lesdites feuilles (3) espacées entre elles soient sensiblement parallèles entre elles.

5. Dispositif selon l'une quelconque des revendications 1 à 3 caractérisé en ce que ladite structure (1) est constituée par un jeu de feuilles (3) de tissu de charbon actif superposées, espacées entre elles, soit concentriques et de sections fermées, soit enroulées de façon spiralée.

6. Dispositif selon l'une quelconque des revendications 1 à 5 caractérisé en ce qu'il comprend des moyens d'extraction des gaz de désorption extraits lors de la phase de régénération du matériau adsorbant, lesdits moyens d'extraction appartenant au groupe comprenant les brûleurs, les incinérateurs, les chambres de condensation (74), les chambres d'épuisement (84) par solvant ou par épuration biologique.

7. Dispositif selon l'une quelconque des revendications 1 à 6 caractérisé en ce qu'il comprend des moyens d'extraction des gaz de désorption extraits lors de la phase de régénération du matériau adsorbant, lesdits moyens d'extraction étant constitués par une chambre de condensation (74).

## Claims

1. Device for treating a fluid loaded with at least one adsorbable constituent, of the type comprising a structure (1) made of adsorbent material designed to be traversed by a flow of the said fluid to be treated so as to adsorb the said adsorbable constituent by the said adsorbent, the said structure being disposed in a treatment vessel (2,40) and the said device comprising means (A,B) for periodically regenerating the adsorbent material by the Joule effect, the said means (A,B) being designed to cooperate with the said structure (1) during a desorption phase consisting of passing an electric current through at least one of the said sheets of the said structure, characterized in that the said structure made of adsorbent material consists of a set of electrically conducting sheets of active carbon cloth (3) or of a set of sheets obtained by weaving electrically conducting threads to which are glued adsorbent particles which are not electrically conducting, the said sheets being superimposed and/or substantially parallel and spaced from each other by a distance of 5 mm to 10 mm and being traversed successively by the said fluid.

2. Device according to claim 1, characterized in that the said fluid is air or water.

3. Device according to either claim 1 or 2, characterized in that it comprises means for producing a partial vacuum, designed to be used at least at the start of each desorption phase, and/or means for free or forced convection of an inert gas.

4. Device according to any one of claims 1 to 3, characterized in that the treatment vessel comprises at least one end wall having a frustoconical shape and in that the said set of sheets (3) is made by folding a sheet of active carbon cloth on itself so that the said sheets (3), spaced from each other, are substantially parallel to each other.

5. Device according to any one of claims 1 to 3, characterized in that the said structure (1) consists of a set of superimposed sheets (3) of active carbon cloth, spaced from each other, either concentrically and with closed sections, or rolled in a spiral manner.

6. Device according to any one of claims 1 to 5, characterized in that it comprises means for extracting the desorption gases extracted during the regeneration phase of the adsorbent material, the said means of extraction belonging to the group comprising burners, incinerators, condensation chambers (74), and extraction chambers (84) using solvents or biological purification.

7. Device according to any one of claims 1 to 6, characterized in that it comprises means for extracting the desorption gases extracted during the regeneration phase of the adsorbent material, the said means of extraction consisting of a condensation chamber (74).

## Patentansprüche

1. Vorrichtung zur Behandlung eines Fluids mit mindestens einem darin enthaltenen adsorbierbaren Bestandteil, mit einer Struktur (1) aus einem adsorbierenden Material zum Durchfluß des Fluids, um den adsorbierbaren Bestandteil durch das adsorbierende Material zu adsorbieren, und wobei die Struktur in einem Reaktionsbehälter (2, 40) angeordnet ist und die Vorrichtung Mittel (A, B) zur periodischen Regeneration des adsorbierenden Materials mit Hilfe des Joule-Effekts umfaßt, wobei die Mittel (A, B) zur Wechselwirkung mit der Struktur (1) im Verlauf einer Desorptionsphase dienen, die darin besteht, daß ein elektrischer Strom in mindestens einer der Schichten der Struktur hindurchfließt, dadurch gekennzeichnet, daß
die Struktur aus dem adsorbierenden Material aus geschichteten Lagen vernetzter elektrisch leitender Aktivkohle (3) besteht oder aus geschichteten Lagen, die durch Ausziehen von elektrisch leitenden Fasern erhalten werden, die mit adsorbierenden, elektrisch nichtleitenden Teilchen verbunden sind, übereinander geschichtet und/oder im wesentlichen parallel mit einem Abstand von 5 bis 10 mm zwischen ihnen sind und sukzessive vom Fluid durchflossen sind.

2. Vorrichtung nach Anspruch 1,
dadurch gekennzeichnet, daß das Fluid Luft oder Wasser ist.

3. Vorrichtung nach einem der Ansprüche 1 oder 2,
dadurch gekennzeichnet, daß sie Mittel zur Realisierung eines Teilhohlraums zur Benutzung mindestens zu Beginn jeder Desorptionsphase, und/oder daß sie Mittel zur freien oder erzwungenen Konvektion eines inerten Gases umfaßt.

4. Vorrichtung nach einem der Ansprüche 1 bis 3,
dadurch gekennzeichnet, daß der Reaktionsbehälter mindestens ein kegelförmiges Ende umfaßt und daß die geschichteten Lagen (3) durch Aufeinanderfaltung der vernetzten Aktivkohle-Lagen derart realisiert werden, daß die untereinander beabstandeten Lagen (3) im wesentlichen parallel zueinander verlaufen.

5. Vorrichtung nach einem der Ansprüche 1 bis 3,
dadurch gekennzeichnet, daß die Struktur aus geschichteten Lagen (3) vernetzter, übereinander beabstandet angeordneter Aktivkohle besteht, die entweder in geschlossener konzentrischer Form oder in Spiralform gewunden angeordnet sind.

6. Vorrichtung nach einem der Ansprüche 1 bis 5,
dadurch gekennzeichnet, daß sie Mittel zur Extraktion von Gasen für die Extraktdesorption wahrend der Regenerationsphase des adsorbierenden Materials umfaßt, wobei die Mittel zur Extraktion derjenigen Gruppe zugehören, welche Brenner,Verbrennungsanlagen, Kondensationskammern (74), Extraktionskammern (84) zur Lösung oder biologischen Reinigung umfassen.

7. Vorrichtung nach einem der Ansprüche 1 bis 6,
dadurch gekennzeichnet, daß sie Mittel zur Extraktion von Gasen für die Extraktdesorption während der Regenerationsphase des adsorbierenden Materials umfaßt, wobei die Mittel zur Extraktion aus einer Kondensationskammer (74) bestehen.
